(19) Europäisches Patentamt
European Patent Office
Office européen des brevets

(11) **EP 3 415 467 B1**

(12) **EUROPEAN PATENT SPECIFICATION**

(45) Date of publication and mention
of the grant of the patent:
**25.11.2020 Bulletin 2020/48**

(51) Int Cl.:
***C01B 25/45*** $^{(2006.01)}$          ***H01M 4/58*** $^{(2010.01)}$

(21) Application number: **17763030.8**

(86) International application number:
**PCT/JP2017/008049**

(22) Date of filing: **01.03.2017**

(87) International publication number:
**WO 2017/154690 (14.09.2017 Gazette 2017/37)**

(54) **METHOD FOR MANUFACTURING VANADIUM LITHIUM PHOSPHATE**

VERFAHREN ZUR HERSTELLUNG VON VANADIUM-LITHIUMPHOSPHAT

PROCÉDÉ DE FABRICATION DE PHOSPHATE DE VANADIUM ET DE LITHIUM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.03.2016 JP 2016044535
28.12.2016 JP 2016255249**

(43) Date of publication of application:
**19.12.2018 Bulletin 2018/51**

(73) Proprietor: **Nippon Chemical Industrial Co., Ltd.
Koto-ku, Tokyo 136-8515 (JP)**

(72) Inventors:
• **FUKAZAWA Junya
Tokyo 136-8515 (JP)**
• **TAKASAKI Atsushi
Tokyo 136-8515 (JP)**

(74) Representative: **Evans, Marc Nigel
Page White & Farrer
Bedford House
John Street
London, WC1N 2BF (GB)**

(56) References cited:
**WO-A1-2011/102358     WO-A1-2014/006948
WO-A1-2015/016190     JP-A- 2010 535 402
JP-A- 2015 064 992     US-A1- 2011 072 649**

• **ANPING TANG ET AL.: 'Electrochemical
Performance of alpha-LiVOPO4/Carbon
Composite Material Synthesized by Sol-Gel
Method' JOURNAL OF THE ELECTROCHEMICAL
SOCIETY vol. 161, no. 1, 2014, pages A10 - A13,
XP055421629**

**Description**

Technical Field

The present invention relates to a method for producing lithium vanadium phosphate useful particularly as a positive electrode active material of a lithium secondary battery.

Background Art

Lithium ion batteries are widely used as batteries for portable devices, laptop computers, electric cars and hybrid cars. The lithium ion batteries are generally considered excellent in capacity and energy density, and, at present, $LiCoO_2$ is mainly used for their positive electrodes; however, developments of $LiMnO_2$, $LiNiO_2$ and the like are also carried out with eagerness due to the Co-resource problem.

At present, attention is paid to $LiFePO_4$ as a further alternative material and the research and development thereof advances in every institution. Fe is excellent in terms of resources; and $LiFePO_4$ using it is excellent in high-temperature characteristics though being slightly low in the energy density. Therefore, $LiFePO_4$ is expected as a positive electrode material for the lithium ion batteries for electrically driven vehicles.

$LiFePO_4$, however, is slightly low in the operation voltage; and then, there is paid attention to a lithium vanadium phosphate ($Li_3V_2(PO_4)_3$) having a NASICON (Na Super Ionic Conductor) structure using V in place of Fe.

As a method for producing lithium vanadium phosphate, there is proposed, for example, a method in which a lithium source, a vanadium compound and a phosphorus source are crushed and mixed; an obtained homogeneous mixture is formed into pellets; and then, the formed product is fired (for example, see Patent Literatures 1 and 2). Further, the following Patent Literature 3 proposes a method in which vanadium (V) oxide is dissolved in an aqueous solution containing lithium hydroxide; a phosphorus source and carbon and/or a nonvolatile organic compound are further added thereto; the resultant raw material mixed solution is dried to thereby obtain a precursor; and the precursor is subjected to a heat treatment in an inert atmosphere to thereby obtain a composite of $Li_3V_2(PO_4)_3$ with an electroconductive carbon material.

Then, the present applicant also proposed before, in the following Patent Literature 4, a production method of a lithium vanadium phosphate-carbon composite, comprising a first step of mixing a lithium source, a pentavalent or tetravalent vanadium compound, a phosphorus source, and an electroconductive carbon material source that produces carbon through thermal decomposition, in a water solvent to thereby prepare a raw material mixed liquid, a second step of heating the raw material mixed liquid to carry out a precipitation forming reaction to thereby obtain a reaction liquid containing a precipitation product, a third step of subjecting the reaction liquid containing the precipitation product to a wet crushing treatment by a media mill to thereby obtain a slurry containing a crushed material, a fourth step of subjecting the slurry containing the crushed material to a spray drying treatment to thereby obtain a reaction precursor, and firing the reaction precursor in an inert gas atmosphere or a reductive atmosphere at 600 to 1,300°C.

Citation List

Patent Literature

Patent Literature 1: National Publication of International Patent Application No. 2001-500665
Patent Literature 2: National Publication of International Patent Application No. 2002-530835
Patent Literature 3: Japanese Patent Laid-Open No. 2008-052970
Patent Literature 4: International Publication No. WO2012/043367 pamphlet

US2011/0072649 describes a technique of producing a lithium-ion battery material comprising vanadium phosphate comprising firing a residue prepared from a vanadium source and a phosphorous source, and adding water and a water-soluble lithium salt to the fired intermediate.

Summary of Invention

Technical Problem

$Li_3V_2(PO_4)_3$ is known to have a theoretical capacity as high as 197 $mAhg^{-1}$.

Lithium secondary batteries using conventional $Li_3V_2(PO_4)_3$ as their positive electrode active material, however, are low in the discharge capacity. The production method of a lithium vanadium phosphate of Patent Literature 4 can provide a high discharge capacity, but in order to obtain a reaction precursor excellent in reactivity, a precipitation forming reaction and a crushing treatment by a media mill are needed, making the production processes complex, which is not industrially advantageous.

Therefore, an object of the present invention is to provide a lithium vanadium phosphate having a single phase in terms of X-ray diffractometry, which is useful particularly as a positive electrode active material of a lithium secondary battery and the like, by an industrially advantageous method.

Solution to Problem

As a result of exhaustive studies in consideration of the above problem, the present inventors have found: that a reaction precursor is excellent in reactivity which is obtained by spray drying a raw material mixed liquid prepared by adding a lithium source to a solution prepared by subjecting a mixed slurry containing a tetravalent or pentavalent vanadium compound, a phosphorus source and a reducing sugar to a heat treatment to carry out a reductive reaction on the vanadium compound, and can thus provide a single-phase high-crystallinity lithium vanadium phosphate even at a low temperature of about 600°C; and that a lithium secondary battery using, as a positive electrode active material, the lithium vanadium phosphate obtained by using the reaction precursor has excellent battery performance. These findings have then led to the completion of the present invention.

Specifically, the present invention provides a method according to claim 1.

Advantageous Effects of Invention

According to the present invention, there is provided, by an industrially advantageous method, a lithium vanadium phosphate having a single phase in terms of X-ray diffractometry, which is useful particularly as a positive electrode active material of a lithium secondary battery and the like; and a lithium secondary battery using the lithium vanadium phosphate as a positive electrode active material has excellent battery performance.

Brief Description of Drawings

[Figure 1] Figure 1 is an X-ray diffraction diagram of reaction precursors obtained in Example 1, Comparative Example 1 and Comparative Example 2.
[Figure 2] Figure 2 is a SEM picture of the reaction precursor obtained in Example 1.
[Figure 3] Figure 3 is an X-ray diffraction diagram of lithium vanadium phosphate samples obtained in Example 1 and Comparative Example 1.
[Figure 4] Figure 4 is a SEM picture of the lithium vanadium phosphate obtained in Example 1.
[Figure 5] Figure 5 is a SEM picture of a reaction precursor obtained in Example 5.
[Figure 6] Figure 6 is an X-ray diffraction diagram of a lithium vanadium phosphate sample obtained in Example 5.
[Figure 7] Figure 7 is a SEM picture of the lithium vanadium phosphate sample obtained in Example 5.
[Figure 8] Figure 8 is an X-ray diffraction diagram of a lithium vanadium phosphate sample obtained in Example 6.
[Figure 9] Figure 9 is a SEM picture of the lithium vanadium phosphate sample obtained in Example 6.

Description of Embodiments

Hereinafter, the present invention will be described based on its preferred embodiments.

A lithium vanadium phosphate obtained by the production method according to the present invention is a lithium vanadium phosphate having a NASICON structure (hereinafter, referred to simply as "lithium vanadium phosphate").

In the present invention, the lithium vanadium phosphate is a lithium vanadium phosphate represented by the following general formula (1):

$$Li_xV_y(PO_4)_3 \qquad (1)$$

wherein x represents 2.5 or more and 3.5 or less, and y represents 1.8 or more and 2.2 or lower,

or a lithium vanadium phosphate prepared by doping the lithium vanadium phosphate represented by the general formula (1), as required, with an Me element (Me represents a metal element or transition metal element of an atomic number of 11 or more, excluding V).

x in the formula (1) is preferably 2.5 or more and 3.5 or less, and especially preferably 2.8 or more and 3.2 or less. y is preferably 1.8 or more and 2.2 or less, and especially preferably 1.9 or more and 2.1 or less.

An Me element to be doped with preferably includes one or two or more selected from Mg, Ca, Al, Mn, Co, Ni, Fe, Ti, Zr, Bi, Cr, Nb, Mo and Cu.

The method for producing a lithium vanadium phosphate according to the present invention comprises a first step of mixing the vanadium compound, the phosphorus source and the reducing sugar in a water solvent to thereby prepare a mixed slurry, a second step of subjecting the obtained mixed slurry to a heat treatment to thereby make a solution, a third step of adding the lithium source to the solution to thereby prepare a raw material mixed liquid, a fourth step of subjecting the raw material mixed liquid to a spray drying treatment to thereby obtain a reaction precursor, and a fifth step of firing the obtained reaction precursor in an inert gas atmosphere or a reductive atmosphere at 500 to 1,300°C.

The first step according to the present invention is a step of subjecting the vanadium compound, the phosphorus source and the reducing sugar to a mixing treatment in a water solvent to thereby obtain a mixed slurry containing the each raw material mixed.

Vanadium pentaoxide is industrially available at a low cost and has excellent reactivity.

Phosphoric acid is industrially available at a low cost and can provide a reaction precursor having excellent reactivity.

With respect to the amounts of the vanadium compound and the phosphorus source added, their amounts satisfy a molar ratio of a V atom in the vanadium compound and a P atom in the phosphorus source, V/P, of 0.50 to 0.80, preferably 0.60 to 0.73, in terms of easily providing a single-phase lithium vanadium phosphate as a final product.

As the reducing sugar, one which at least thermally decomposes to isolatedly release carbon in an inert or reductive atmosphere in the firing in the fifth step is used. The reducing sugar promotes a reductive reaction of the vanadium compound in the second step, makes the solution to be obtained to be a reaction solution having a favorably stirrable viscosity, and besides, becomes a component necessary for prevention of oxidation of vanadium in the fifth step. Since a surplus reducing sugar is converted to an electroconductive carbon in the firing in the fifth step, the reducing sugar can be added in an excess amount in the present production method so that the surplus reducing sugar can also function as a component of an electroconductive carbon source to impart electroconductivity to the lithium vanadium phosphate.

Examples of the reducing sugar usable include glucose, fructose, lactose, maltose and sucrose; among these, lactose and sucrose are preferable in view of providing a reaction precursor having excellent reactivity.

The amount of the reducing sugar added is preferably 0 to 20% by mass in terms of C atom based on a lithium vanadium phosphate to be produced.

The amount of a C atom contained in the reducing sugar is likely to decrease after the firing as compared with before the firing. Hence, when the amount of the reducing sugar blended in the first step is 0.3 to 40 parts by mass in terms of C atom with respect to 100 parts by mass of a lithium vanadium phosphate to be produced, the amount of an electroconductive carbon to which the reducing sugar is converted easily satisfies 0 to 20 parts by mass in terms of C atom with respect to 100 parts by mass of the lithium vanadium phosphate. When the amount of the reducing sugar blended with respect to 100 parts by mass of a lithium vanadium phosphate to be produced is in the above range, the lithium vanadium phosphate can impart excellent performance to the lithium secondary battery in the case of using the lithium vanadium phosphate as a positive electrode active material of a lithium secondary battery. Particularly by adding the reducing sugar in an amount of 0.5 to 40 parts by mass, preferably 5 to 30 parts by mass, in terms of C atom with respect to 100 parts by mass of the lithium vanadium phosphate, the amount of an electroconductive carbon to which the reducing sugar is converted satisfies 0.1 to 20 parts by weight, preferably 0.5 to 15 parts by mass, with respect to 100 parts by mass of the lithium vanadium phosphate, and a sufficient electroconductivity can then be imparted by the electroconductive carbon. As a result, the internal resistance of the lithium secondary battery can be lowered and the discharge capacity per mass or volume can increase. By contrast, when the amount of the reducing sugar blended with respect to 100 parts by mass of a lithium vanadium phosphate to be produced is smaller than the above range, there is a tendency that a single-phase lithium vanadium phosphate is difficult to obtain, which is not preferable. Further, when the amount of the reducing sugar added exceeds the above range, the discharge capacity per mass or volume is liable to decrease.

In the first step according to the present invention, the production histories of the above-mentioned vanadium compound, phosphorus source and reducing sugar does not matter, but those having as low an impurity content as possible are preferable in view of producing a high-purity lithium vanadium phosphate.

The water solvent to be used in the first step according to the present invention is not limited to water alone, and may also be a mixed solvent of water with a hydrophilic organic solvent.

The order of adding the vanadium compound, the phosphorus source and the reducing sugar to the water solvent, and the mixing means are not especially limited, and the addition and mixing is carried out so that the each raw material makes a homogeneously dispersed mixed slurry.

The second step according to the present invention is a step of subjecting the mixed slurry obtained in the first step to a heat treatment at least to carry out a reductive reaction of the vanadium compound, to thereby convert the mixed slurry to a solution containing the each component dissolved. The temperature of the heat treatment according to the second step is 60 to 100°C, and preferably 80 to 100°C. The reason therefor is because: when the heat treatment temperature is lower than 60°C, the reaction time becomes long, which is industrially disadvantageous; and in order to make the heat treatment temperature higher than 100°C, a pressure vessel has to be used, which is not industrially advantageous. Therefore, the second step can be carried out under the atmospheric pressure.

The time of the reductive reaction is not critical in the present production method. When the heat treatment is carried out usually for 0.2 hour or longer, particularly for 0.5 to 2 hours, a satisfactory solution can be obtained.

The third step according to the present invention is a step of adding the lithium source to the solution obtained in the second step to thereby obtain a raw material mixed liquid.

Here, the raw material mixed liquid may be a solution or a slurry.

Lithium carbonate and lithium hydroxide are industrially available at a low cost and can provide a reaction precursor having excellent reactivity.

Further, the lithium source may be added in the form of a solution in which the lithium source is dissolved in a water solvent, to the solution obtained in the second step.

The amount of the lithium source added satisfy a molar ratio of a Li atom in the lithium source and a P atom in the phosphorus source, Li/P, of 0.70 to 1.30, preferably 0.83 to 1.17, in terms of easily providing a single-phase lithium vanadium phosphate as a final product.

In the third step according to the present invention, the production history of the above-mentioned lithium source does not matter, but the lithium source having as low an impurity content as possible is preferable in view of producing a high-purity lithium vanadium phosphate.

The temperature when adding the lithium source is not especially limited, but when the temperature exceeds 35°C, a deposit is observed. In the present production method, although a slurry raw material mixed liquid containing the deposit may be subjected to the fourth step described later, it is preferable that the raw material mixed liquid obtained in the third step be in a solution state, in view of providing a reaction precursor more homogeneous and excellent in reactivity. From this viewpoint, the temperature when adding the lithium source is lower than 35°C, preferably 30°C or lower, and especially preferably 0 to 30°C.

After the addition of the lithium source, a maturing reaction can be carried out, as required, for the purpose of obtaining a reaction precursor further improved in various physical properties including powder characteristics such as particle size distribution.

The raw material mixed liquid after the maturing reaction is obtained as a slurry containing the each component homogeneously mixed, but it is a slurry containing finer particles unlike Patent Literature 4. Therefore, in the present production method, the raw material mixed liquid is subjected to a spray drying as it is in the following fourth step without being crushed by a media mill, whereby the reaction precursor excellent in reactivity can be obtained.

The temperature of the maturing reaction is 60 to 100°C, and preferably 80 to 100°C. Then, the maturing time is 0.5 hour or longer, and preferably 0.5 to 10 hours.

The fourth step according to the present invention is a step of subjecting the raw material mixed liquid obtained in the third step to a spray drying to thereby obtain a reaction precursor.

As drying methods of the liquid, methods other than the spray drying method are also known, but the spray drying method is employed in the present production method based on the finding that selection of the spray drying method is advantageous.

In detail, when the spray drying method is used, a granular material in which the each component is homogeneously dispersed and densely crammed is obtained, and the granular material is used as the reaction precursor in the present invention, and subjected to a firing in the fifth step described later, whereby a lithium vanadium phosphate of a single phase in terms of X-ray diffractometry can be obtained.

In the spray drying method, the liquid is atomized by a predetermined means, and by drying fine droplets generated thereby, the reaction precursor is obtained. Examples of methods of atomizing the liquid include a method involving using a rotating disc, and a method involving using a pressure nozzle. In the present step, either one can be used.

In the spray drying method, the size of droplets of the atomized liquid affects stable drying and the property of an obtained dried powder. From this viewpoint, the size of the atomized droplets is 5 to 100 $\mu$m, and especially preferably 10 to 50 $\mu$m. It is desirable that the amount of the liquid fed to a spray drying apparatus be determined in consideration of this viewpoint.

The reaction precursor obtained by the spray drying method is subjected to a firing in the following step, and powder characteristics such as the average particle diameter of secondary particles of a lithium vanadium phosphate to be obtained come to almost succeed to those of the reaction precursor. Hence, it is preferable that the spray drying be carried out such that the particle diameter as determined by a scanning electron microscope (SEM) observation of secondary particles of the reaction precursor is 5 to 100 $\mu$m, particularly 10 to 50 $\mu$m, in terms of control of the particle diameter of a target lithium vanadium phosphate.

Here, with respect to the drying temperature in the spray drying apparatus, it is preferable to regulate the temperature of the powder at 90 to 150°C, preferably 100 to 130°C, by regulating the hot-air inlet port temperature at 180 to 250°C, preferably at 200 to 240°C, in terms of prevention of the moisture absorption of the powder and ease in the recovery of the powder.

Whereas the reaction precursor used in Patent Literature 4 contains crystalline substances, the reaction precursor to be used in the present invention is amorphous, which is one feature. The present inventors presume that the reaction precursor used in the present invention is better in reactivity, is sintered at a lower temperature, and becomes higher in crystallinity than the reaction precursor of Patent Literature 4, since being amorphous.

The reaction precursor thus obtained is then subjected to the fifth step of a firing in an inert gas atmosphere or a reductive atmosphere at 500 to 1,300°C to thereby obtain a target lithium vanadium phosphate.

The fifth step according to the present invention is a step of subjecting the reaction precursor obtained in the fourth step to a firing at 500 to 1,300°C to thereby obtain a lithium vanadium phosphate of a single phase in terms of X-ray diffractometry.

The firing temperature according to the fifth step is 500 to 1,300°C, and preferably 600 to 1,000°C. The reason therefor is because when the firing temperature is lower than 500°C, the firing time taken to become the single phase is long; by contrast, when the firing temperature is higher than 1,300°C, the lithium vanadium phosphate melts.

The firing is carried out in an inert gas atmosphere or a reductive atmosphere for the reason that oxidation of vanadium and the melting are to be prevented.

An inert gas usable in the fifth step is not especially limited, and examples thereof include nitrogen gas, helium gas and argon gas.

The firing time is not critical in the present production method. When the firing is carried out usually for 2 hours or longer, particularly for 3 to 24 hours, a lithium vanadium phosphate of a single phase in terms of X-ray diffractometry can be obtained.

The lithium vanadium phosphate thus obtained may be subjected to a plurality number of firing steps, as required.

In the present invention, for the purpose of stabilizing the crystal structure of the lithium vanadium phosphate to further improve the battery performance such as cycle characteristics, as required, an Me source (Me represents a metal element or transition metal element of an atomic number of 11 or more, excluding V) can be mixed in the mixed slurry of the first step according to the production method of the present invention, followed by carrying out the second step to the fifth step according to the production method of the present invention, to thereby obtain a lithium vanadium phosphate represented by the above general formula (1) and doped with the Me element. Here, in the present invention, the Me element is present through replacing therewith Li sites or/and V sites of the lithium vanadium phosphate represented by the above general formula (1).

Me in an Me source is a metal element or transition metal element of an atomic number of 11 or more, excluding V, and preferable Me elements include Mg, Ca, Al, Mn, Co, Ni, Fe, Ti, Zr, Bi, Cr, Nb, Mo and Cu. These may be used singly or in a combination of two or more.

The Me source includes oxides, hydroxides, halides, carbonate salts, nitrate salts, carbonate salts and organic acid salts having an Me element. Here, in the mixed slurry of the first step, the Me source may be dissolved to be present or may be present as a solid substance. In the case where the Me source is present as a solid substance in the mixed slurry, it is preferable to use the solid substance having an average particle diameter of 100 $\mu$m or smaller, preferably 0.1 to 50 $\mu$m in view of providing a reaction precursor having excellent reactivity.

Further, in the case of mixing the Me source, it is preferable, though depending on the kind of the Me element to be used, that in many cases, the amount of the Me source mixed satisfy a molar ratio of the total of a V atom in the vanadium compound and the Me element in the Me source (V + Me = M) and a P atom in the phosphorus source, M/P, of 0.5 to 0.80, and preferably 0.60 to 0.73, and a molar ratio Me/V of higher than 0 and 0.45 or lower, and preferably higher than 0 and 0.1 or lower.

Further, in the present production method, the lithium vanadium phosphate obtained in the fifth step can be subjected to a sixth step of further subjecting the lithium vanadium phosphate to a heat treatment to thereby regulate the amount of the electroconductive carbon contained in the lithium vanadium phosphate.

The specific operation of the sixth step is carried out by subjecting the lithium vanadium phosphate containing an electroconductive carbon obtained in the fifth step to the heat treatment to thereby carry out an oxidation treatment on the electroconductive carbon.

It is preferable that the heat treatment according to the sixth step be carried out in an oxygen-containing atmosphere. It is preferable that the oxygen concentration be 5% by volume or higher, and preferably 10 to 30% by volume, in terms of highly efficiently carrying out the oxidation treatment on the electroconductive carbon.

It is preferable that the temperature of the heat treatment according to the sixth step be made to be 250 to 450°C, and preferably 300 to 400°C, in terms of highly efficiently carrying out the oxidation treatment on the electroconductive carbon.

The time of the heat treatment according to the sixth step is not critical in the present production method. The longer the time of the heat treatment, the lower the content of the electroconductive carbon contained in the lithium vanadium phosphate. It is preferable to carry out the heat treatment by previously setting a suitably favorable condition so that the content of the electroconductive carbon becomes a desired one.

The lithium vanadium phosphate thus obtained is a lithium vanadium phosphate of a single phase in terms of X-ray diffractometry, and with respect to preferable physical properties, it is preferable that the lithium vanadium phosphate be a lithium vanadium phosphate in an aggregated state in which a large number of primary particles having an average particle diameter of 10 $\mu$m or smaller, preferably 0.01 to 5 $\mu$m, aggregate and form secondary particles having an average particle diameter of 5 to 100 $\mu$m, preferably 10 to 50 $\mu$m.

In the present production method, the obtained lithium vanadium phosphate, may further be subjected to a disintegration treatment or a crushing treatment, and further classification, as required.

Further, the lithium vanadium phosphate obtained by the present production method may also be a lithium vanadium phosphate-carbon composite in which the particle of the lithium vanadium phosphate is coated with the electroconductive carbon originated from the reducing sugar, and by using the lithium vanadium phosphate-carbon composite as a positive electrode active material, a much higher discharge-capacity lithium secondary battery can be provided.

Further, the lithium vanadium phosphate obtained by the present production method can also be used for applications to solid electrolytes.

Examples

Hereinafter, the present invention will be described in more detail by way of Examples, but the present invention is not limited to these Examples.

{Example 1}

<First step>

2 L of an ion-exchange water was put in a 5-L beaker, and 605 g of a 85% phosphoric acid, 320 g of vanadium pentaoxide and 170 g of sucrose (cane sugar) were added thereto. The resultant was stirred at room temperature (25°C) to thereby obtain a mud yellow mixed slurry.

<Second step>

The obtained mixed slurry was heated at 95°C for 1 hour under stirring to carry out a reductive reaction to thereby obtain a dark blue reaction solution.

<Third step>

The reaction solution was cooled to room temperature (25°C). Then, 220 g of a lithium hydroxide monohydrate salt was dissolved in 1.5 L of an ion-exchange water to thereby prepare a solution, and the solution was added to the reaction solution at room temperature to thereby obtain a dark blue solution of a raw material mixed liquid.

<Fourth step>

Then, the solution was fed to a spray drying apparatus set at an outlet port temperature of 120°C to thereby obtain a reaction precursor. The average secondary particle diameter determined by a SEM observation method of the reaction precursor was 12 $\mu$m.

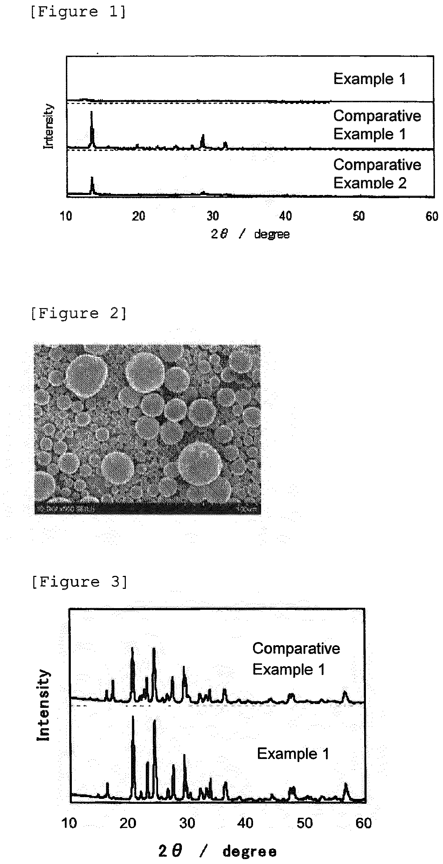

The obtained reaction precursor was subjected to an X-ray diffractometry using a CuK$\alpha$ line as an X-ray source, and it was confirmed that the reaction precursor was amorphous. An X-ray diffraction diagram of the reaction precursor is shown in Figure 1. Further an electron microscope picture (SEM image) of the reaction precursor is shown in Figure 2.

<Fifth step>

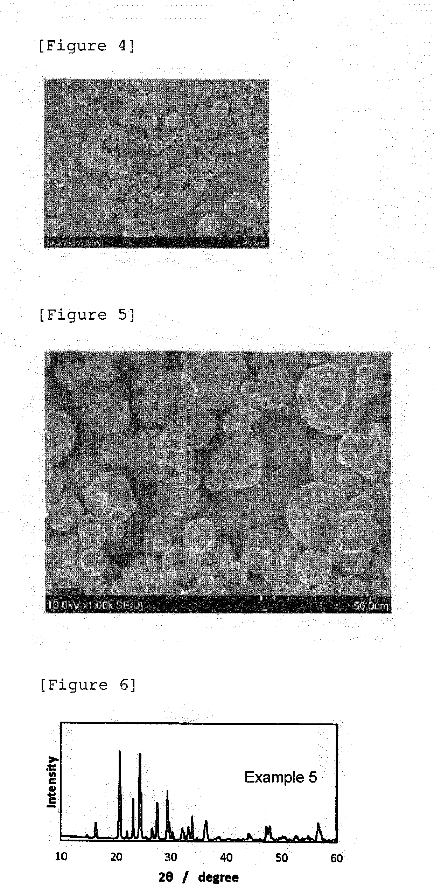

The obtained reaction precursor was put in a mullite-made sagger, and fired in a nitrogen atmosphere at 600°C for 10 hours to thereby obtain a lithium vanadium phosphate sample. As a result of an X-ray diffractometry analysis for the obtained lithium vanadium phosphate sample, it was confirmed that the sample was a single-phase lithium vanadium phosphate. An X-ray diffraction diagram of the obtained lithium vanadium phosphate sample is shown in Figure 3. Further, an electron microscope picture (SEM image) of the obtained lithium vanadium phosphate sample is shown in Figure 4.

Further, the residual carbon amount of the obtained lithium vanadium phosphate sample was measured by a total organic carbon (TOC) analyzer (TOC-5000A, manufactured by Shimadzu Corp.), and determined as a content of a C atom.

{Examples 2 to 4}

Lithium vanadium phosphate samples were obtained by carrying out the reactions as in Example 1, except for changing the firing temperature to be 700 to 900°C in the fifth step.

As a result of X-ray diffractometry analyses for the obtained lithium vanadium phosphate samples, it was confirmed that any of the samples was a single-phase lithium vanadium phosphate. Further, the residual carbon amounts were determined as in Example 1.

[Table 1]

| | 1st Step | | | 2nd Step | 3rd Step | 5th Step | | Residual Carbon Amount (% by mass) |
|---|---|---|---|---|---|---|---|---|
| | 1)Molar Ratio of V/P | Reducing Sugar | | Reaction Temperature (°C) | 2)Molar Ratio of Li/P | Firing Temperature (°C) | Time (h) | |
| | | Kind | Addition Amount (g) | | | | | |
| Example 1 | 0.67 | sucrose | 170 | 95 | 1.0 | 600 | 10 | 1.9 |
| Example 2 | 0.67 | sucrose | 170 | 95 | 1.0 | 700 | 10 | 1.7 |
| Example 3 | 0.67 | sucrose | 170 | 95 | 1.0 | 800 | 10 | 1.6 |
| Example 4 | 0.67 | sucrose | 170 | 95 | 1.0 | 900 | 10 | 0.9 |

Note 1) "Molar ratio of V/P" in the first step is a molar ratio of a V atom in the vanadium pentaoxide added to a P atom in the phosphoric acid added.
Note 2) "Molar ratio of Li/P" in the third step is a molar ratio of a Li atom in the lithium hydroxide added in the third step to a P atom in the phosphoric acid added in the first step.

{Comparative Example 1}

3.5 L of an ion-exchange water was put in a 5-L beaker, and 220 g of a lithium hydroxide monohydrate salt, 320 g of vanadium pentaoxide, 605 g of a 85% phosphoric acid and 170 g of sucrose were added thereto. Thereafter, the resultant was heated at 95°C for 1 hour under stirring to thereby obtain a green slurry. Then, the slurry was fed to a spray drying apparatus set at an outlet port temperature of 120°C to thereby obtain a reaction precursor. The obtained reaction precursor was subjected to an X-ray diffractometry, and as a result, for the reaction precursor, a distinct diffraction peak was confirmed. An X-ray diffraction diagram of the reaction precursor is shown together in Figure 1.

The obtained reaction precursor was put in a mullite-made sagger, and fired in a nitrogen atmosphere at 600°C for 10 hours to thereby obtain a lithium vanadium phosphate sample.

An X-ray diffraction analysis diagram of the obtained lithium vanadium phosphate sample is shown together in Figure 3. As a result of the X-ray diffraction analysis, the presence of a different phase other than the lithium vanadium phosphate was confirmed. Further, the residual carbon amount was determined as in Example 1, and was 1.9% by mass.

{Comparative Example 2}

2 L of an ion-exchange water was put in a 5-L beaker, and 252 g of a lithium hydroxide monohydrate salt was added and dissolved therein to thereby obtain a solution. 364 g of vanadium pentaoxide was added to the solution, and stirred for 1 hour to thereby obtain a liquid. 72 g of glucose (grape sugar) and 692 g of a 85% phosphoric acid were added to the liquid, and the resultant was stirred for 1 hour to thereby obtain a raw material mixed liquid. Then, the raw material mixed liquid was fed to a spray drying apparatus set at a hot-air inlet port temperature of 230°C and at an outlet port temperature of 120°C to thereby obtain a reaction precursor. An X-ray diffraction diagram of the reaction precursor is shown together in Figure 1.

The obtained reaction precursor was put in a mullite-made sagger, and fired in a nitrogen atmosphere at 900°C for 12 hours to thereby obtain a fired material. The fired material was disintegrated by a jet mill to thereby obtain a lithium vanadium phosphate sample. As a result of an X-ray diffraction analysis of the obtained lithium vanadium phosphate sample, it was confirmed that the lithium vanadium phosphate sample was a single-phase lithium vanadium phosphate. Further, the residual carbon amount was determined as in Example 1, and was 0.1% by mass.

{Example 5}

<First step>

2.5 L of an ion-exchange water was put in a 5-L beaker, and 864.7 g of a 85% phosphoric acid, 457.7 g of vanadium pentaoxide and 156.6 g of lactose monohydrate were added thereto. The resultant was stirred at room temperature (25°C) to thereby obtain a mud yellow mixed slurry.

<Second step>

The obtained mixed slurry was heated at 95°C for 1 hour under stirring to carry out a reductive reaction to thereby obtain a dark blue reaction solution.

<Third step>

The reaction solution was cooled to room temperature (25°C). Then, 314.7 g of a lithium hydroxide monohydrate salt was dissolved in 1.5 L of an ion-exchange water to thereby prepare a solution, and the solution was added to the reaction solution at room temperature to thereby obtain a dark blue solution of a raw material mixed liquid.

<Fourth step>

Then, the solution was fed to a spray drying apparatus set at an outlet port temperature of 120°C to thereby obtain a reaction precursor. The obtained reaction precursor was subjected to an X-ray diffractometry using a CuK$\alpha$ line as an X-ray source, and it was confirmed that the reaction precursor was amorphous. An electron microscope picture (SEM image) of the reaction precursor is shown in Figure 5.

<Fifth step>

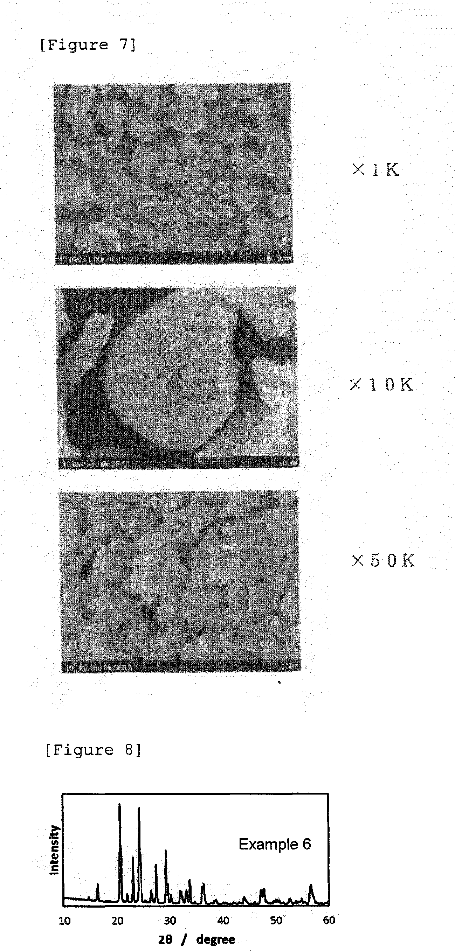

The obtained reaction precursor was put in a mullite-made sagger, and fired in a nitrogen atmosphere at 800°C for 10 hours to thereby obtain a lithium vanadium phosphate sample. As a result of an X-ray diffractometry analysis for the obtained lithium vanadium phosphate sample, it was confirmed that the sample was a single-phase lithium vanadium phosphate. Then, an X-ray diffraction diagram of the obtained lithium vanadium phosphate sample is shown in Figure 6. Further, an electron microscope picture (SEM image) of the obtained lithium vanadium phosphate sample is shown in Figure 7.
Further, the residual carbon amount of the obtained lithium vanadium phosphate sample was measured by a total organic carbon (TOC) analyzer (TOC-5000A, manufactured by Shimadzu Corp.), and was 1.5% by mass. Further, the BET specific surface area was 9.8 $m^2$/g.

{Example 6}

<First step>

2.5 L of an ion-exchange water was put in a 5-L beaker, and 864.7 g of a 85% phosphoric acid, 457.7 g of vanadium pentaoxide and 156.6 g of lactose monohydrate were added thereto. The resultant was stirred at room temperature (25°C) to thereby obtain a mud yellow mixed slurry.

<Second step>

The obtained mixed slurry was heated at 95°C for 1 hour under stirring to carry out a reductive reaction to thereby obtain a dark blue reaction solution.

<Third step>

The reaction solution was cooled to room temperature (25°C). Then, 277.1 g of a lithium carbonate was dissolved in 1.5 L of an ion-exchange water to thereby prepare a solution, and the solution was added to the reaction solution at room temperature to thereby obtain a dark blue solution of a raw material mixed liquid.

<Fourth step>

Then, the solution was fed to a spray drying apparatus set at an outlet port temperature of 120°C to thereby obtain a reaction precursor. The obtained reaction precursor was subjected to an X-ray diffractometry using a CuKα line as an X-ray source, and it was confirmed that the reaction precursor was amorphous.

<Fifth step>

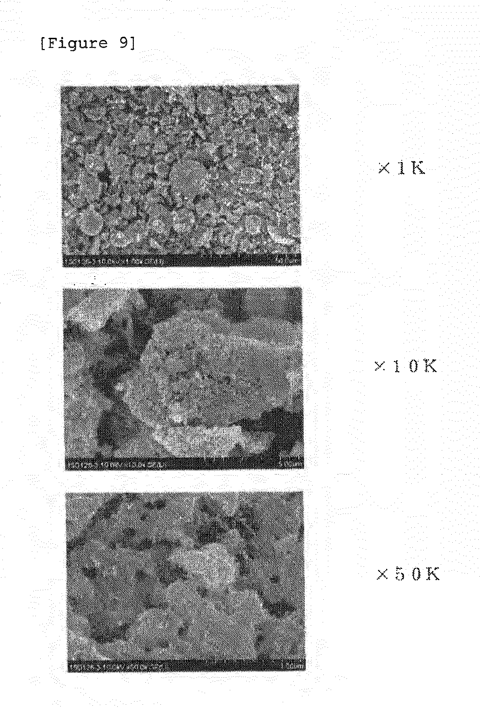

The obtained reaction precursor was put in a mullite-made sagger, and fired in a nitrogen atmosphere at 800°C for 10 hours to thereby obtain a lithium vanadium phosphate sample. As a result of an X-ray diffractometry analysis for the obtained lithium vanadium phosphate sample, it was confirmed that the sample was a single-phase lithium vanadium phosphate. An X-ray diffraction diagram of the obtained lithium vanadium phosphate sample is shown in Figure 8. An electron microscope picture (SEM image) of the obtained lithium vanadium phosphate sample is shown in Figure 9.

Further, the residual carbon amount of the obtained lithium vanadium phosphate sample was measured by a total organic carbon (TOC) analyzer (TOC-5000A, manufactured by Shimadzu Corp.), and was 1.2% by mass. Further, the BET specific surface area was 9.2 $m^2/g$.

<Evaluation of the battery performance>

<Battery performance test>

(I) Fabrication of lithium secondary batteries:

91% by mass of the lithium vanadium phosphate sample of Example 4, Example 5 or Comparative Example 2 produced as described above, 6% by mass of a graphite powder and 3% by mass of a polyvinylidene fluoride were mixed to thereby make a positive electrode agent, and the positive electrode agent was dispersed in N-methyl-2-pyrrolidone to prepare a kneaded paste. The obtained kneaded paste was applied on an aluminum foil, followed by drying, and then pressed to be punched into a disc of 15 mm in diameter to thereby obtain a positive electrode plate.

By using the obtained positive electrode plate and also using members including a separator, a negative electrode, the positive electrode, current collector plates, a mounting fixture, external terminals and an electrolyte solution, a lithium secondary battery was fabricated. Among these, the negative electrode used was a metal lithium foil, and the electrolyte solution used was one in which 1 mol of $LiPF_6$ was dissolved in 1 L of a mixed liquid of ethylene carbonate and methyl ethyl carbonate in a ratio of 1:1.

(2) Evaluation of the performance of the battery

The fabricated lithium secondary battery was operated under the following condition, and the performance of the battery was evaluated.

<Evaluation of the cycle characteristics>

The battery was charged in a constant-current constant-voltage (CCCV) charging of a total charging time of 5 hours in which the battery was charged at 0.5C up to 4.2 V and then held at 4.2 V, and thereafter, discharged at 0.1C down to 2.0 V in a constant-current (CC) discharging. This operation was taken to be one cycle, and the discharge capacity was measured at every cycle. The cycle was repeated 20 times; and the capacity retention rate was calculated by the following expression from the discharge capacities at the first cycle and the 20th cycle. Here, the discharge capacity at the first cycle was taken as an initial discharge capacity.

$$\text{Capacity retention rate (\%) = ((a discharge capacity at the 20th cycle)/(a discharge capacity at the first cycle)) × 100}$$

[Table 2]

|  | Initial Discharge Capacity (mAhg$^{-1}$) | Capacity Retention Rate (%) |
|---|---|---|
| Example 4 | 127.6 | 95.8 |
| Example 5 | 131.8 | 97.6 |
| Comparative Example 2 | 102.2 | 76.6 |

{Example 7}

<Sixth step>

The lithium vanadium phosphate sample (residual carbon amount: 1.6% by mass) obtained in Example 3 was subjected to a heat treatment in an electric furnace in an air atmosphere (oxygen concentration: 20% by volume) at 350°C for 15 hours to thereby obtain a lithium vanadium phosphate sample.

As a result of an X-ray diffractometry analysis for the obtained lithium vanadium phosphate sample, it was confirmed that the sample was a single-phase lithium vanadium phosphate. Further, the residual carbon amount of the obtained lithium vanadium phosphate sample was measured by a total organic carbon (TOC) analyzer (TOC-5000A, manufactured by Shimadzu Corp.), and was 0.1% by mass. Further, the BET specific surface area was 7.1 m$^2$/g.

## Claims

1. A method for producing a lithium vanadium phosphate having a NASICON structure, the method comprising:

    a first step of mixing a vanadium compound comprising vanadium pentoxide, a phosphorus source comprising phosphoric acid and a reducing sugar in a water solvent to thereby prepare a mixed slurry, wherein the molar ratio of vanadium atoms to phosphorous atoms is 0.5 to 0.8, and the amount of the reducing sugar is 0.3 to 40 parts by mass in terms of C atom with respect to 100 parts by mass of lithium vanadium phosphate;
    a second step of subjecting the mixed slurry to a heat treatment to thereby make a solution;
    a third step of adding a lithium source comprising lithium hydroxide or comprising lithium carbonate to the solution to thereby prepare a raw material mixed liquid; wherein the molar ratio of lithium atoms to phosphorous atoms is 0.70 to 1.30;
    a fourth step of subjecting the raw material mixed liquid to a spray drying treatment to thereby obtain a reaction precursor; and
    a fifth step of firing the reaction precursor in an inert gas atmosphere or a reductive atmosphere at 500 to 1,300°C.

2. The method for producing a lithium vanadium phosphate according to claim 1, wherein a temperature of the heat treatment in the second step is 60 to 100°C.

3. The method for producing a lithium vanadium phosphate according to claim 1, wherein the reducing sugar is selected from sucrose and lactose.

4. The method for producing a lithium vanadium phosphate according to claim 1, wherein in the first step, an Me source is further mixed in the mixed slurry, wherein Me represents a metal element or transition metal element of an atomic number of 11 or more, excluding V.

5. The method for producing a lithium vanadium phosphate according to any one of claims 1 to 4, further comprising a sixth step of subjecting the lithium vanadium phosphate obtained through the fifth step to a heat treatment.

**6.** The method for producing a lithium vanadium phosphate according to claim 5, wherein the heat treatment is carried out in an oxygen-containing atmosphere.

**7.** The method for producing a lithium vanadium phosphate according to claim 5 or 6, wherein the heat treatment is carried out at a temperature of 250 to 450°C.

**Patentansprüche**

**1.** Verfahren zur Herstellung eines Lithiumvanadiumphosphats mit einer NASICON-Struktur, wobei das Verfahren Folgendes umfasst:

einen ersten Schritt des Mischens einer Vanadiumpentoxid umfassenden Vanadiumverbindung, einer Phosphorsäure umfassenden Phosphorquelle und eines reduzierenden Zuckers in einem Wasserlösungsmittel, um dadurch eine gemischte Aufschlämmung herzustellen, wobei das Stoffmengenverhältnis von Vanadiumatomen zu Phosphoratomen 0,5 bis 0,8 beträgt und die Menge des reduzierenden Zuckers 0,3 bis 40 Massenteile, bezogen auf das C-Atom, in Bezug auf 100 Massenteile Lithiumvanadiumphosphat beträgt;
einen zweiten Schritt des Einwirkenlassens einer Wärmebehandlung auf die gemischte Aufschlämmung, um dadurch eine Lösung herzustellen;
einen dritten Schritt des Zugebens einer Lithiumquelle, die Lithiumhydroxid umfasst oder Lithiumcarbonat umfasst, zur Lösung, um dadurch eine gemischte Ausgangsstofflösung herzustellen; wobei das Stoffmengenverhältnis von Lithiumatomen zu Phosphoratomen 0,70 bis 1,30 beträgt;
einen vierten Schritt des Einwirkenlassens einer Sprühtrocknungsbehandlung auf die gemischte Ausgangsstofflösung, um dadurch eine Reaktionsvorstufe zu erhalten; und
einen fünften Schritt des Brennens der Reaktionsvorstufe in einer Inertgasatmosphäre oder einer reduzierenden Atmosphäre bei 500 bis 1300 °C.

**2.** Verfahren zur Herstellung eines Lithiumvanadiumphosphats nach Anspruch 1, wobei die Temperatur der Wärmebehandlung im zweiten Schritt 60 bis 100 °C beträgt.

**3.** Verfahren zur Herstellung eines Lithiumvanadiumphosphats nach Anspruch 1, wobei der reduzierende Zucker aus Saccharose und Lactose ausgewählt ist.

**4.** Verfahren zur Herstellung eines Lithiumvanadiumphosphats nach Anspruch 1, wobei im ersten Schritt weiterhin eine Me-Quelle in die gemischte Aufschlämmung eingemischt wird, wobei Me ein Metallelement oder Übergangsmetallelement mit einer Ordnungszahl von 11 oder mehr darstellt, wobei V ausgeschlossen ist.

**5.** Verfahren zur Herstellung eines Lithiumvanadiumphosphats nach einem der Ansprüche 1 bis 4, das weiterhin einen sechsten Schritt des Einwirkenlassens einer Wärmebehandlung auf das im fünften Schritt erhaltene Lithiumvanadiumphosphat umfasst.

**6.** Verfahren zur Herstellung eines Lithiumvanadiumphosphats nach Anspruch 5, wobei die Wärmebehandlung in einer sauerstoffhaltigen Atmosphäre durchgeführt wird.

**7.** Verfahren zur Herstellung eines Lithiumvanadiumphosphats nach Anspruch 5 oder 6, wobei die Wärmebehandlung bei einer Temperatur von 250 bis 450 °C durchgeführt wird.

**Revendications**

**1.** Procédé pour la production d'un phosphate de lithium et de vanadium possédant une structure NASICON, le procédé comprenant :

une première étape de mélange d'un composé de vanadium comprenant du pentoxyde de vanadium, d'une source de phosphore comprenant de l'acide phosphorique et d'un sucre réducteur dans un solvant à eau pour ainsi préparer une suspension mélangée, le rapport molaire des atomes de vanadium sur les atomes de phosphore étant de 0,5 à 0,8, et la quantité du sucre réducteur étant de 0,3 à 40 parties en masse en termes d'atome de C par rapport à 100 parties en masse de phosphate de lithium et de vanadium ;

une deuxième étape de soumission de la suspension mélangée à un traitement à la chaleur pour ainsi faire une solution ;

une troisième étape d'ajout d'une source de lithium comprenant de l'hydroxyde de lithium ou comprenant du carbonate de lithium à la solution pour ainsi préparer un liquide mélangé de matériau brut ; le rapport molaire des atomes de lithium sur les atomes de phosphore étant de 0,70 à 1,30 ;

une quatrième étape de soumission du liquide mélangé de matériau brut à un traitement de séchage par pulvérisation pour ainsi obtenir un précurseur de réaction ; et

une cinquième étape de cuisson du précurseur de réaction dans une atmosphère de gaz inerte ou dans une atmosphère réductrice à une température de 500 à 1 300 °C.

2. Procédé pour la production d'un phosphate de lithium et de vanadium selon la revendication 1, une température du traitement à la chaleur dans la deuxième étape étant de 60 à 100 °C.

3. Procédé pour la production d'un phosphate de lithium et de vanadium selon la revendication 1, le sucre réducteur étant choisi parmi le saccharose et le lactose.

4. Procédé pour la production d'un phosphate de lithium et de vanadium selon la revendication 1, dans lequel dans la première étape, une source de Me est de plus mélangée dans la suspension mélangée, Me représentant un élément métallique ou un élément de métal de transition d'un numéro atomique de 11 ou plus, à l'exclusion de V.

5. Procédé pour la production d'un phosphate de lithium et de vanadium selon l'une quelconque des revendications 1 à 4, comprenant en outre une sixième étape de soumission du phosphate de vanadium et de lithium obtenu après la cinquième étape à un traitement à la chaleur.

6. Procédé pour la production d'un phosphate de lithium et de vanadium selon la revendication 5, le traitement à la chaleur étant mis en œuvre dans une atmosphère contenant de l'oxygène.

7. Procédé pour la production d'un phosphate de lithium et de vanadium selon la revendication 5 ou 6, le traitement à la chaleur étant mis en œuvre à une température de 250 à 450 °C.

[Figure 1]

[Figure 2]

[Figure 3]

[Figure 4]

[Figure 5]

[Figure 6]

[Figure 7]

×1K

×10K

×50K

[Figure 8]

[Figure 9]

×1K

×10K

×50K

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2001500665 A
- WO 2002530835 A
- JP 2008052970 A
- WO 2012043367 A
- US 20110072649 A